(19) Europäisches Patentamt
European Patent Office
Office européen des brevets

(11) **EP 3 548 738 B1**

(12) **EUROPÄISCHE PATENTSCHRIFT**

(45) Veröffentlichungstag und Bekanntmachung des Hinweises auf die Patenterteilung:
**22.12.2021   Patentblatt 2021/51**

(21) Anmeldenummer: **17772665.0**

(22) Anmeldetag: **20.09.2017**

(51) Int Cl.:
*F03D 7/04* (2006.01)     *H02J 3/48* (2006.01)
*H02J 3/38* (2006.01)     *F03D 7/02* (2006.01)
*H02J 3/46* (2006.01)

(86) Internationale Anmeldenummer:
**PCT/EP2017/073699**

(87) Internationale Veröffentlichungsnummer:
**WO 2018/099626 (07.06.2018 Gazette 2018/23)**

(54) **VERFAHREN UND VORRICHTUNG ZUM REGELN VON EINEM LEISTUNGSWERT EINES OFFSHORE-WINDENERGIESYSTEMS**

METHOD AND DEVICE FOR CONTROLLING A POWER VALUE OF AN OFFSHORE WIND ENERGY SYSTEM

PROCÉDÉ ET DISPOSITIF DE RÉGULATION D'UNE VALEUR DE PUISSANCE D'UNE SYSTÈME DE PRODUCTION D'ÉNERGIE ÉOLIENNE EN MER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2016   DE 102016123011**

(43) Veröffentlichungstag der Anmeldung:
**09.10.2019   Patentblatt 2019/41**

(73) Patentinhaber: **RWE Renewables GmbH
45145 Essen (DE)**

(72) Erfinder:
• **FELTES, Christian
22453 Hamburg (DE)**
• **RUNGE, Jörn
31608 Marklohe (DE)**

(74) Vertreter: **Cohausz & Florack
Patent- & Rechtsanwälte
Partnerschaftsgesellschaft mbB
Bleichstraße 14
40211 Düsseldorf (DE)**

(56) Entgegenhaltungen:
DE-A1-102007 044 601     DE-A1-102010 056 456
US-A1- 2013 168 963     US-A1- 2015 249 415
US-A1- 2015 280 629

• Jens Fortmann ET AL: "A NOVEL CENTRALISED WIND FARM CONTROLLER UTILISING VOLTAGE CONTROL CAPABILITY OF WIND TURBINES", 16th PSCC, 14. Juli 2008 (2008-07-14), Seiten 1-7, XP055139449, Gefunden im Internet: URL:http://www.pscc-central.org/uploads/tx_ethpublications/pscc2008_159.pdf [gefunden am 2014-09-10]

EP 3 548 738 B1

**Beschreibung**

Die Erfindung betrifft zwei Verfahren zum Regeln von einem Leistungswert eines Offshore-Windenergiesystems gemäß den Ansprüchen 1 und 3. Darüber hinaus betrifft die Erfindung korrespondierende Regelungsvorrichtungen für ein Offshore-Windenergiesystem gemäß den Ansprüchen 7 und 8 und ein Offshore-Windenergiesystem gemäss dem Anspruch 9.

Windenergiesysteme werden vermehrt zur Produktion von elektrischer Energie eingesetzt. Bevorzugt werden hierbei so genannte Offshore-Windenergiesysteme errichtet. Grund hierfür ist, dass im Vergleich zu Onshore-Windenergiesystemen die erwartete mittlere Windgeschwindigkeit und damit der zu erwartenden Energieertrag aufgrund der Lage von Offshore-Windenergiesystemen in der Regel höher ist.

An Offshore-Windenergiesysteme werden jedoch andere Anforderungen als an Onshore-Windenergiesystemen gestellt. Neben der Tatsache, dass das Betreiben eines Offshore-Windenergiesystems mit einer Mehrzahl von Windkraftanlagen und einer Substation bzw. Umspannstation und die Anbindung an das übergeordnete Stromnetz grundsätzlich aufgrund des Offshore-Standorts problematischer als das Betreiben eines Onshore-Windenergiesystems bzw. dessen Anbindung an das übergeordnete Stromnetz ist, werden insbesondere auch klare und eindeutige Netzanschlussbedingungen von dem Netzbetreiber beim Anschluss eines Offshore-Windenergiesystems an ein (öffentliches) Stromnetz gestellt. Insbesondere umfassen die Netzanschlussbedingungen Vorgaben hinsichtlich eines Blindleistungsbereichs bzw. eines Leistungsfaktorbereichs, welcher durch das Offshore-Windenergiesystem vorzuhalten ist.

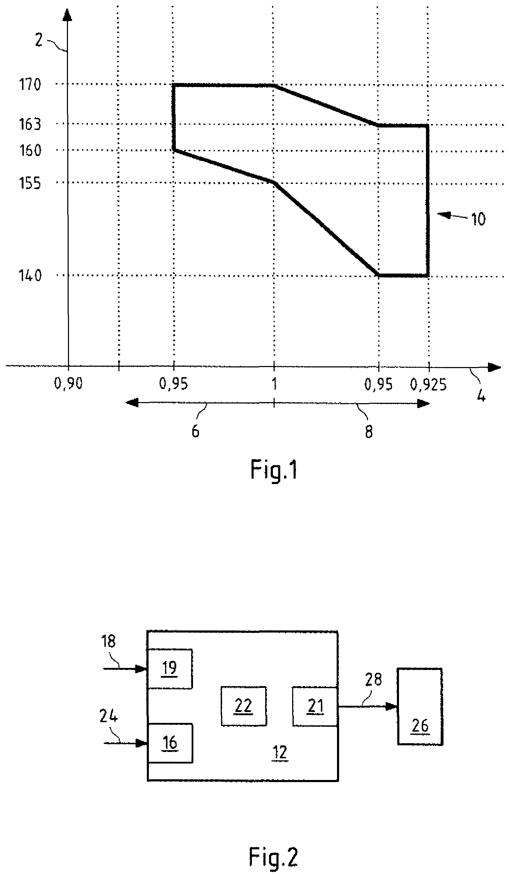

Figur 1 zeigt ein beispielhaftes Diagramm, aus dem der vorzuhaltende Leistungsfaktorbereich 10 hervorgeht. Mit dem Bezugszeichen 2 ist eine erste Achse, insbesondere die Leiter-Leiter Spannung in kV, und mit dem Bezugszeichen 4 die weitere Achse, insbesondere ein Leistungswerts in Form eines des Leistungsfaktors, bezeichnet. Ferner bezeichnet das Bezugszeichen 6 den untererregten und das Bezugszeichen 8 den übererregten Bereich.

Zur Regelung des Leistungswerts, also zur Regelung der abgegebenen bzw. eingespeisten Blind- und Wirkleistung, kann ein Offshore-Windenergiesystem über eine Regelungsvorrichtung mit einem Wirkleistungsregler und einem Blindleistungsregler verfügen. Jedoch gestaltet sich die Regelung des Leistungswerts, insbesondere des Leistungsfaktors hinsichtlich einer vollständigen Erfüllung des geforderten Bereiches gemäß dem Stand der Technik aus verschiedenen Gründen problematisch.

Um die Vorgaben hinsichtlich eines Blindleistungsbereichs bzw. eines Leistungsfaktorbereichs zu erfüllen, ist es aus dem Stand der Technik bekannt, Blindleistung über die Kraftwerksgeneratoren (z.B. der Windkraftanlage(n)) und/oder durch die Installation von zusätzlichen Bauteilen (z.B. schaltbare Kompensationsspulen und/oder Kondensatoren) bereitzustellen (siehe zum Beispiel US2015249415 A).

Die Blindleistungsbereitstellung durch die Kraftwerksgeneratoren ist jedoch in der Regel auf das Nötigste begrenzt. Dies führt dazu, dass die Bereitstellung der Blindleistung durch die Kraftwerksgeneratoren in bestimmten Betriebssituationen nicht ausreicht, um den gesamten, vorgegebenen Leistungsfaktorbereich und insbesondere einen aktuellen, vorgegebenen Leistungssollwert für das Offshore-Windenergiesystem zu erfüllen. Beispielsweise bei Betriebssituationen mit hoher Einspeiseleistung kann ein hoher Blindleistungsbedarf in den Haupttransformatoren des Offshore-Windenergiesystems (z.B. durch den hohen Stromfluss durch die Transformator-Induktivität) entstehen, welcher den möglichen Leistungsfaktorbereich in Bezug auf die vorgegebene Anforderung ungünstig verschiebt (insbesondere in Richtung des untererregten Bereiches (vgl. Fig. 1)).

Zur Lösung dieser Problematik ist aus dem Stand der Technik eine Erweiterung des Blindleistungsbereiches des Offshore-Windenergiesystems durch die Installierung von zusätzlichen Bauteilen bzw. Komponenten bekannt. Eine entsprechende Erweiterung ist jedoch sehr kostenintensiv, da dies nahezu alle elektrischen Komponenten des Offshore-Windenergiesystems betreffen kann (z.B. Umrichter, Transformator, Kabel, bei doppelt gespeisten Asynchrongeneratoren ggf. auch den Generator) und somit ein aufwendiges Re-Design und/oder Erweiterung des Offshore-Windenergiesystems erforderlich wird (einschließlich einer ggf. notwendigen Neu-Zertifizierung). Die Installation von zusätzlichen Bauteilen in der Umspannstation bzw. Offshore-Substation wäre aufgrund der hohen Kosten für die Bauteile und den umbauten Raum aufgrund der Lage des Offshore-Windenergiesystems ebenfalls problematisch.

Daher liegt der Erfindung die Aufgabe zugrunde, ein Verfahren zum Regeln von einem Leistungswert von einem Offshore-Windenergiesystem bereitzustellen, welches in einfacher Weise eine Einhaltung eines vorgegebenen Leistungsfaktorbereichs, insbesondere auch in Betriebssituationen mit hoher Einspeiseleistung, ermöglicht.

Erfindungsgemäß wird diese Aufgabe durch ein Verfahren mit den Merkmalen des Hauptanspruchs 1 oder 3 und eine Regelungsvorrichtung mit den Merkmalen des Hauptanspruchs 7 oder 8 gelöst. Ausführungsbeispiele sind in der Unteransprüchen weitergeführt.

Indem im Gegensatz zum Stand der Technik die eingespeiste Wirkleistung von mindestens einem Offshore-Windenergiesystem abhängig von einem vorgegebenen Leistungssollwert und dem augenblicklichen Blindleistungszustandsgröße des Offshore-Windenergiesystems geregelt wird, insbesondere im Bedarfsfall reduziert wird, wird in einfacher Weise eine Einhaltung eines vorgegebenen Leistungsfaktorbereichs (entsprechend dem vorgegebenen Leistungssollwert), insbesondere auch in Betriebssituationen mit hoher Einspeiseleistung, ermöglicht. Die Installation von zusätzlichen Bauteilen bzw. Komponenten zur Erweiterung des Blindleistungsbereichs kann entfallen.

Das vorliegende Verfahren dient der Regelung von einem Leistungswert, insbesondere des Leistungsfaktors bzw. der Blindleistung, von mindestens einem Offshore-Windenergiesystem. Unter einer Regelung des Leistungswerts ist insbesondere zu verstehen, dass die an ein öffentliches Stromnetz abgegebene Leistung so geregelt wird, dass ein vorgegebener Leistungssollwert, insbesondere ein vorgegebener Leistungsfaktorsollwert und/oder ein Blindleistungssollwert, eingehalten wird.

Ein Offshore-Windenergiesystem kann eine Vielzahl von Windkraftanlagen aufweisen, die elektrisch mit einer Umspannstation, insbesondere eine Substation, über Seekabel verbunden sind. Eine Windkraftanlage wandelt die kinetische Energie des Windes mittels eines Rotors und eines Generators in elektrische Energie um, welche über die Seekabel an die Substation übertragen wird. Die Substation kann elektrisch mit einer Onshore-Station, wie eine Hochspannungs-Gleichstrom-Übertragungs-(HGÜ-) Station, verbunden sein. Beispielsweise können Sammelanbindungen vorgesehen sein, bei denen (noch) eine Offshore-Sammelstation (HGÜ-Station) dazwischen hängen kann. Eine elektrische Verbindung kann insbesondere durch mindestens ein Seekabel realisiert sein. Am Einspeisepunkt in das öffentliche Stromnetz (z.B. an der Substation und/oder Kopfstation) kann mindestens ein elektrischer Parameter erfasst werden, um die in das Stromnetz eingespeiste Leistung bzw. den eingespeisten Strom zu regeln.

Ein Leistungssollwert, insbesondere ein Leistungsfaktorsollwert und/oder ein Blindleistungssollwert, kann von einer entfernt angeordneten Entität, beispielsweise durch den Netzbetreiber des Stromnetzes, in den das Offshore-Windenergiesystem die Leistung eingespeist wird, vorgegeben werden. Der Leistungssollwert liegt insbesondere in einem eingangs beschriebenen vorzuhaltenden Leistungsfaktor- oder Blindleistungsbereich. Ein Wirkleistungssollwert ist insbesondere nicht unter dem Leistungssollwert zu verstehen.

Erfindungsgemäß ist vorgesehen, dass zur Einhaltung von diesem vorgegebenen Leistungssollwert eine augenblickliche Blindleistungszustandsgröße des Offshore-Windenergiesystem insbesondere bestimmt und bereitgestellt wird. Die augenblickliche Blindleistungszustandsgröße gibt insbesondere die derzeit bzw. aktuell zur Verfügung stehende Blindleistung des Offshore-Windenergiesystem (direkt oder indirekt) an. Aus der augenblicklichen Blindleistungszustandsgröße kann ein Wirkleistungskorrekturwert bestimmt werden. Die Blindleistungszustandsgröße kann insbesondere ein Leistungsfaktor, eine Spannung und/oder eine Blindleistung umfassen.

Um den vorgegebenen Leistungssollwert, beispielsweise ein Leistungsfaktorsollwert $\lambda_{soll} = \dfrac{|P|}{S}$ , wobei P die Wirkleistung ist und S die Scheinleistung ist, einzuhalten, wird die abgegebene Wirkleistung entsprechende dem bestimmten

Wirkleistungskorrekturwert geregelt. Insbesondere kann die eingespeiste Wirkleistung derart geregelt werden, dass die eingespeiste Wirkleistung reduziert wird.

Es sei angemerkt, dass bei im Wesentlichen sinusförmigen Strömen und Spannungen folgende Formel für den Leistungsfaktorsollwert $\lambda_{soll} = \dfrac{P}{S} = \cos\varphi$ gilt, wobei φ der Phasenverschiebungswinkel zwischen S und P ist.

Die Installierung zusätzlicher Bauteile kann entfallen. In einfacher und kostenarmer Weise kann eine Leistungswertregelung bereitgestellt werden. Indem die augenblickliche Blindleistungszustandsgröße berücksichtigt wird, wird insbesondere erreicht, dass die eingespeiste Wirkleistung nur soweit reduziert wird, dass der vorgegebene Leistungssollwert eingehalten wird. Mit anderen Worten wird die Wirkleistung nur soweit reduziert, wie es erforderlich ist, um den vorgegebenen Leistungssollwert einzuhalten.

Grundsätzlich gibt es verschiedenen Ausführungsoptionen, um die augenblickliche Blindleistungszustandsgröße zu bestimmen und/oder den Wirkleistungskorrekturwert zu bestimmen.

Gemäß einer ersten Ausführungsform des Verfahrens der vorliegenden Offenbarung kann das Bereitstellen der augenblicklichen Blindleistungszustandsgröße Folgendes umfassen:

- Berechnen der maximal verfügbaren Blindleistung des Offshore-Windenergiesystems abhängig von dem augenblicklichen Betriebszustand des Offshore-Windenergiesystems und von mindestens einem vorbestimmten Blindleistungsbetriebsmittelparameter des Offshore-Windenergiesystems.

Vorzugsweise wird eine Vielzahl von vorbestimmten bzw. vorbekannten Blindleistungsbetriebsmittelparameter des Offshore-Windenergiesystems bei der Berechnung der maximal verfügbaren Blindleistung berücksichtigt. Ein Blindleistungsbetriebsmittelparameter gibt für ein Bauelement des Offshore-Windenergiesystems insbesondere die Menge an Blindleistung an, die durch das Bauelement (z.B. Kabel, Transformator(en), Kompensationseinrichtung(en), etc.) verursacht wird. Dies kann beispielsweise für (nahezu) jedes Bauelement des Offshore-Windenergiesystems dokumentiert sein.

Neben den vorbestimmten Blindleistungsbetriebsmittelparameter wird der augenblickliche Betriebszustand des Offshore-Windenergiesystems von mindestens einem geeigneten Erfassungsmittel erfasst und in der Berechnung berücksichtigt. Vorzugsweise wird mindestens ein augenblicklicher Schaltzustand des Offshore-Windenergiesystems erfasst und/oder mindestens eine augenblickliche Netzspannung des Offshore-Windenergiesystems gemessen und/oder mindestens ein augenblicklicher Arbeitspunkt von mindestens einer Windkraftanlage des Offshore-Windenergiesystems erfasst. Indem der augenblickliche Betriebszustand des Offshore-Windenergiesystems und die vorbestimmten Blindleistungsbetriebsmittelparameter bei der Berechnung berücksichtigt werden, kann die aktuell maximal verfügbare Blindleistung nahezu exakt bestimmt werden. Beispielsweise kann die Berechnung entsprechend folgender Formel durchgeführt werden:

$$Q_{max} = \sum Q_{WEA,max} + \sum Q_{Kabel} + \sum Q_{Trafos} + \sum Q_{Verbraucher} + \sum Q_{Kompensation,max}$$

$Q_{WEA}$ umfasst die max. Blindleistung aller Windkraftanlagen, die in Betrieb sind, $Q_{Kabel}$ und $Q_{Trafo}$ die lastabhängigen und lastunabhängigen Blindleistungen der Betriebsmittel, $\sum Q_{Verbraucher}$ die Blindleistungen der Verbraucher auf OSS (Offshore Umspannstation oder Substation) und in nicht einspeisenden Windkraftanlagen. Schließlich ist $\sum Q_{Kompensation,max}$ die maximale Blindleistung durch zusätzliche Kompensation.

Insbesondere der augenblickliche Betriebszustand des Offshore-Windenergiesystems wird vorzugsweise nahezu kontinuierlich oder regelmäßig erneut bestimmt. Entsprechend wird die Berechnung nahezu kontinuierlich oder regelmäßig erneut durchgeführt.

Gemäß einer weiteren Ausführungsform des vorliegenden Verfahrens kann das Bestimmen des Wirkleistungskorrekturwerts das Berechnen eines maximal zulässigen Wirkleistungssollwerts abhängig von der berechneten maximal verfügbaren Blindleistung umfassen. Die Wirkleistung des Offshore-Windenergiesystems kann in Abhängigkeit des berechneten maximal zulässigen Wirkleistungssollwerts geregelt werden. Insbesondere kann die Berechnung des maximalen Wirkleistungswertes, bei dem der geforderte Leistungsfaktorsollwert oder Blindleistungssollwert am Netzanschlusspunkt noch eingehalten werden kann, von der zuvor berechneten maximal verfügbaren Blindleistung abgeleitet werden. Hierdurch kann die Wirkleistung mit möglichst hoher Genauigkeit geregelt werden.

Gemäß einer bevorzugten (alternativen) Ausführungsform des Verfahrens gemäß der vorliegenden Offenbarung kann das Bereitstellen der augenblicklichen Blindleistungszustandsgröße Folgendes umfassen:

- Leiten von mindestens einer mindestens eine Windkraftanlage betreffende Stellgröße von einer Regelungseinrichtung des Offshore-Windenergiesystems an eine Regelungserweiterungseinrichtung,
- wobei die Stellgröße einen physikalischen Zusammenhang zur augenblicklichen Blindleistung des Offshore-Windenergiesystems aufweist, und
- Bestimmen des Wirkleistungskorrekturwerts durch die Regelungserweiterungseinrichtung in Abhängigkeit der bereitgestellten Stellgröße.

Insbesondere ist erkannt worden, dass durch eine zusätzliche Regelungserweiterungseinrichtung, die sich an die Regelungseinrichtung des Offshore-Windenergiesystems anschließen kann, in einfacher Weise eine Leistungswertregelung, wie eine Leistungsfaktorregelung oder Blindleistungsregelung, bereitgestellt werden kann, die gewährleistet, dass in jeder Betriebssituation der vorgegebene Leistungssollwert (ohne Installation von zusätzlichen Bauelementen) eingehalten werden kann bei minimaler (notwendiger) Wirkleistungsreduktion.

Hierzu kann der Regelungserweiterungseinrichtung, insbesondere eine Begrenzungsregelungseinrichtung (kurz Begrenzungsregler), umfassend mindestens einen Regler (z.B. I- oder PI-Regler) mindestens eine Stellgröße von mindestens einer Windkraftanalage zur Verfügung gestellt werden. Die Stellgröße kann einen (direkten) physikalischen Zusammenhang zur Blindleistung aufweisen (z.B. Blindleistung, Blindstrom, Phasenwinkel der komplexen Scheinleistung oder des Stromes; die Blindleistung direkt beeinflussende Komponente der Generatorstatorspannung; die Blindleistung direkt beeinflussende Komponente der Rotorspannung; die Blindleistung direkt beeinflussende Komponente der Generatorstatorflussverkettung, etc.). Mit dem mindestens einen Regler der Regelungserweiterungseinrichtung kann in Abhängigkeit dieser Stellgröße ein Wirkleistungskorrekturwert bestimmt werden. Dann kann in Abhängigkeit des so bestimmten Wirkleistungskorrekturwerts die Leistungsabgabe insbesondere am Einspeisepunkt geregelt werden. Insbesondere kann der Wirkleistungskorrekturwert an die Regelungseinrichtung des Offshore-Windenergiesystems hierfür zurückgeführt werden. Der Vorteil einer Regelungserweiterungseinrichtung besteht zudem darin, dass eine bereits installierte (konventionelle) Regelungseinrichtung des Offshore-Windenergiesystems in einfacher Weise derart erweitert werden kann, dass ein vorgegebener Leistungssollwert eingehalten werden kann. Die Regelungserweiterungseinrichtung kann ein Hardwaremodul, ein Softwaremodul oder eine Kombination hiervon sein.

Eine zuvor beschriebene Leistungswertregelung kann jedoch nur in bestimmten Betriebssituationen erforderlich sein. Gemäß einer bevorzugten Ausführungsform des offenbarten Verfahrens kann mindestens ein Totbandbereich in der Regelungserweiterungseinrichtung vorgebeben werden, derart, dass nur bei Erreichen der Begrenzung der Regelungseinrichtung die Regelungserweiterungseinrichtung des Offshore-Windenergiesystems aktiviert wird.

Der beschriebene alternative Ansatz ist im Vergleich zum ersten Ansatz insbesondere unabhängig von Betriebsmittelparametern und/oder dem augenblicklichen Betriebszustand. Die Regelungsstruktur der Begrenzungsregelungseinrichtung verfügt über eine geeignete Reglungsstruktur (z.B. mit PI- und/oder I-Regler), welche ohne Kenntnis von Betriebsmittelparametern und/oder Betriebszustand eine möglichst hohe Genauigkeit und Zuverlässigkeit sowie eine ausreichende Dynamik zur Erfüllung der Netzanschlussregeln, also zumindest dem Leistungssollwert, bereitstellt.

Ferner kann die Begrenzungsregelungseinrichtung realisiert werden, derart, dass dieser nur dann aktiv eingreift, wenn die Regelungseinrichtung, insbesondere ein Blindleistungsregler der Regelungseinrichtung, in seine Begrenzung läuft. Der Ausgang der Begrenzungsregelungseinrichtung kann auf die Regelungseinrichtung, insbesondere auf den Wirkleistungssollwert einer Regelungseinrichtung des Offshore-Windenergiesystem, zurückgeführt werden, um die notwendige Wirkleistungsreduktion zur Erfüllung der Blindleistungspriorität bzw. zur Einhaltung des vorgegebenen Leistungssollwert zu bewirken.

Vorzugsweise kann gemäß einer Ausführungsform als eine erste Stellgröße eine Ausgangsgröße eines Blindleistungsreglers der Regelungseinrichtung an die Regelungserweiterungseinrichtung geleitet werden. Als mindestens eine weitere Stellgröße kann die Regelabweichung des Blindleistungsreglers der Regelungseinrichtung an die Regelungserweiterungseinrichtung geleitet werden. Die erste Stellgröße und die weitere Stellgröße kann zum Bilden einer summierten Regelungsgröße für die Regelungserweiterungseinrichtung addiert werden.

Hierdurch kann insbesondere erreicht werden, dass die Regelungserweiterungseinrichtung nur dann aktiv eingreift bzw. aktiviert wird, wenn an dem Eingang der Regelungseinrichtung, insbesondere am Eingang des Blindleistungsreglers, eine Regelabweichung vorliegt mit dem gleichen Vorzeichen wie am Ausgang der Regelungseinrichtung, insbesondere des Blindleistungsreglers der Regelungseinrichtung. Besonders bevorzugt ist es, dass die Regelungserweiterungseinrichtung nur dann aktiv eingreift, wenn ein Blindleistungsregler der Regelungseinrichtung in seine Begrenzung gelaufen ist und gleichzeitig eine Regelabweichung an seinem Eingang vorliegt mit dem gleichen Vorzeichen wie am Ausgang. Es versteht sich, dass bei anderen Regelungserweiterungseinrichtungsstrukturen die Vorzeichen auch anders sein können (z.B. bei einem PI-Regler).

Darüber hinaus wird gemäß einer weiteren Ausführungsform der vorliegenden Offenbarung vorgeschlagen, dass als Totbandbereich ein Totbandwert entsprechend der Ausgangsbegrenzung des Blindleistungsreglers der Regelungseinrichtung bereitgestellt wird. Beispielsweise kann es sich um einen konstanten Wert handeln, der mit der Ausgangsbegrenzung des Blindleistungsreglers der Regelungseinrichtung übereinstimmt.

Ein Differenzwert kann aus der summierten Regelungsgröße und dem Totbandwert gebildet und einem ersten Regler der Regelungserweiterungseinrichtung zugeleitet werden. Beispielsweise kann die summierte Regelungsgröße von dem Totbandwert subtrahiert werden (oder umgekehrt). Ein Summenwert kann aus der summierten Regelungsgröße und dem Totbandwert gebildet und mindestens einem weiteren Regler Regelungserweiterungseinrichtung zugeleitet werden. Die Ausgangsgröße von einem der vorzugsweise parallel angeordneten Regler kann als Wirkleistungskorrekturwert an einen Wirkleistungsregler der Regelungseinrichtung geführt werden. Dies ermöglicht es, einen Regler zur Regelung im untererregten Bereich und einen Regler zur Regelung im übererregten Bereich einzusetzen (vgl. Fig. 1). Insbesondere ist stets nur ein Regler der zumindest zwei Regler aktiv. Das Ausgangssignal des aktiven Reglers kann als Wirkleistungskorrekturwert an einen Wirkleistungsregler der Regelungseinrichtung geführt werden. Der Regler ist solange aktiv und gibt einen Wirkleistungskorrekturwert aus, bis die zugeleitete Stellgröße des jeweiligen Reglers durch die bewirkte Wirkleistungsreduktion zu null wird (oder die Grenze für die Wirkleistungsreduktion erreicht wird). Mit einer derartigen Regelungsstruktur einer Regelungsvorrichtung kann erreicht werden, dass die eingespeiste Wirkleistung ohne genaue Kenntnis des Betriebszustandes des Offshore-Windenergiesystems bei Bedarf genau soweit reduziert wird, wie es für die Einhaltung des Blindleistungssollwertes oder Leistungsfaktorsollwerts notwendig ist.

Gemäß einer weiteren Ausführungsform kann die Regelungserweiterungseinrichtung mindestens einen Regler aus der folgenden Gruppe umfassen:

- PI-Regler,
- I-Regler,
- Zustandsregler
- Zustandsbeobachter
- Fuzzy Regler,
- Monte Carlo Regler,
- Regler umfassend ein neuronales Netz, und
- Regler basierend auf metaheuristischen Optimierungsalgorithmen (z.B. Partikelschwarm).

Beispielsweise können neuronale Netze eingerichtet sein, an vorzugsweise sämtliche Varianten von Topologien und/oder Einspeiseszenarien von Offshore-Windenergiesystemen angelernt zu werden. Ein neuronales Netz kann derart konfiguriert und insbesondere angelernt sein, dass eine Regelungsabweichung beispielsweise von einem Blindleistungsregler einer Regelungseinrichtung (z.B. der Blindleistung am Netzanschlussknoten) detektiert wird und das neuronale Netz hierauf geeignet reagiert, wobei die Grenzen (Strom, Spannung) von mindestens einer Windkraftanlage berücksichtigt wird.

Ein weiterer Aspekt der Erfindung ist eine Regelungsvorrichtung, insbesondere für ein Offshore-Windenergiesystem. Die Regelungsvorrichtung umfasst mindestens einen Eingang eingerichtet zum Empfangen eines Leistungssollwerts. Der Leistungssollwert ist ein Leistungsfaktorsollwert und/oder ein Blindleistungssollwert. Die Regelungsvorrichtung umfasst mindestens einen weiteren Eingang eingerichtet zum Empfangen von zumindest einer augenblicklichen Blindleistungszustandsgröße des Offshore-Windenergiesystems. Die Regelungsvorrichtung umfasst mindestens eine Bestimmungseinrichtung eingerichtet zum Bestimmen eines Wirkleistungskorrekturwerts abhängig von dem bereitgestellten Leistungssollwert und der bereitgestellten augenblicklichen Blindleistungszustandsgröße. Die Regelungsvorrichtung umfasst mindestens einen Ausgang eingerichtet zum Leiten des bestimmten Wirkleistungskorrekturwerts an einen Wirkleistungsregler eingerichtet zum Regeln der Wirkleistung des Offshore-Windenergiesystems abhängig von dem weitergeleiteten Wirkleistungskorrekturwert, derart, dass der bereitgestellte Leistungssollwert zumindest eingehalten wird.

Die Regelungsvorrichtung kann insbesondere entsprechend dem zuvor beschriebenen Verfahren betrieben werden. Die Regelungsvorrichtung kann entsprechend der oben beschriebenen Regelungserweiterungseinrichtung gebildet sein oder Mittel zum Berechnen der maximal verfügbaren Blindleistung des Offshore-Windenergiesystems und insbesondere Mittel zum Berechnen eines maximal zulässigen Wirkleistungssollwerts umfassen. Insbesondere kann das Bestimmungsmittel zumindest Teil einer Regelungserweiterungseinrichtung oder Mittel zum Berechnen eines maximal zulässigen Wirkleistungssollwerts umfassen, Auch ist es möglich, dass die Regelungsvorrichtung zumindest teilweise aus der oben beschriebenen Regelungseinrichtung und der oben beschriebenen Regelungserweiterungseinrichtung gebildet ist. Die Regelungsvorrichtung kann auch für eine Photovoltaikanlage, insbesondere für den mindestens einen Umrichter einer Photovoltaikanlage, eingesetzt werden.

Ein noch weiterer Aspekt der Erfindung ist ein Offshore-Windenergiesystem. Das Offshore-Windenergiesystem umfasst mindestens eine Windkraftanlage. Das Offshore-Windenergiesystem umfasst mindestens eine zuvor beschriebene Regelungsvorrichtung.

Vorzugsweise kann das Offshore-Windenergiesystem eine Vielzahl von Windkraftanlagen umfassen, die über Seekabel mit einer (gemeinsamen) Offshore-Substation verbunden sind. Die Offshore-Substation kann wiederum mit einer optionalen Onshore-Kopfstation verbunden sein. Die Regelungsvorrichtung kann beispielsweise in der Offshore-Substation oder der Onshore-Kopfstation installiert sein.

Ferner kann vorgesehen sein, dass ein Offshore-Windenergiesystem aus zwei (oder mehr) beispielsweise benachbarten Sub-Offshore-Windenergiesystemen gebildet sein kann, die jeweils über eine Vielzahl von Windkraftanlagen, eine Substation und/oder eine Kopfstation verfügen können. Hier kann die Leistungswertregelung, insbesondere das obige Verfahren, derart erfolgen, dass die Gesamtleistung, die durch die zumindest zwei Sub-Offshore-Windenergiesysteme eingespeist wird, entsprechend den obigen Ausführungen geregelt wird. Beispielsweise können zwei Regelungsvorrichtungen von einer übergeordneten Steuerung gesteuert werden.

Die Merkmale der Verfahren, Systeme und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Verfahren, die erfindungsgemäße Regelungsvorrichtung und das erfindungsgemäße Offshore-Windenergiesystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1    ein beispielhaftes Diagramm, aus dem der vorzuhaltende Leistungsfaktorbereich hervorgeht,

Fig. 2    eine schematische Ansicht eines Ausführungsbeispiels einer Regelungsvorrichtung gemäß der vorliegenden Offenbarung,

Fig. 3    eine schematische Ansicht eines Ausführungsbeispiels eines Offshore-Windenergiesystem gemäß der vorliegenden Offenbarung,

Fig. 4    eine schematische Ansicht eines weiteren Ausführungsbeispiels einer Regelungsvorrichtung gemäß der vorliegenden Offenbarung,

Fig. 5    eine schematische Ansicht eines weiteren Ausführungsbeispiels einer Regelungsvorrichtung gemäß der vorliegenden Offenbarung, und

Fig. 6    ein Diagramm eines Ausführungsbeispiels eines Verfahrens gemäß der vorliegenden Offenbarung.

Nachfolgend werden für gleiche Elemente gleiche Bezugszeichen verwendet.

Figur 2 zeigt eine schematische Ansicht eines Ausführungsbeispiels einer Regelungsvorrichtung 12 gemäß der vorliegenden Offenbarung. Die gezeigte Regelungsvorrichtung 12 kann zusätzlich das Modul 26 umfassen.

Wie aus der Figur 2 zu erkennen ist, umfasst die Regelungsvorrichtung 12 einen ersten Eingang 19 eingerichtet zum Empfangen eines Leistungssollwerts. Der Leistungssollwert, insbesondere ein Leistungsfaktorsollwert und/oder ein Blindleistungssollwert, kann beispielsweise über eine Kommunikationsverbindung 18 von einem Server eines Netzbetreibers bereitgestellt und insbesondere vorgegeben werden.

Die Regelungsvorrichtung 12 verfügt über mindestens einen weiteren Eingang 16 eingerichtet zum Empfangen von zumindest einer augenblicklichen Blindleistungszustandsgröße des Offshore-Windenergiesystems über eine weitere Verbindung 24. Hierbei kann gemäß einem Ausführungsbeispiel vorgesehen sein, dass das Bereitstellen der augenblicklichen Blindleistungszustandsgröße das Berechnen der maximal verfügbaren Blindleistung des Offshore-Windenergiesystems abhängig von dem augenblicklichen Betriebszustand des Offshore-Windenergiesystems und von mindestens einem vorbestimmten Blindleistungsbetriebsmittelparameter des Offshore-Windenergiesystems umfassen. So kann die maximal verfügbare Blindleistung aus den dokumentierten Blindleistungsbereichen der Windkraftanlagen und den Betriebsmittelparametern des Offshore-Windenergiesystems (Kabel, Trafos, Kompensationseinrichtungen) unter Berücksichtigung des aktuellen Betriebszustandes (Schaltzustand im Windparknetz, gemessene Netzspannungen und Arbeitspunkte der Windkraftanlagen) berechnet und bereitgestellt werden. Es versteht sich, dass die Berechnung auch durch die Regelungsvorrichtung, beispielsweise der Bestimmungseinrichtung 22 und/oder einem weiteren Modul durchgeführt werden kann.

Darüber hinaus kann mindestens eine Bestimmungseinrichtung 22 eingerichtet zum Bestimmen eines Wirkleistungskorrekturwerts abhängig von dem bereitgestellten Leistungssollwert und der bereitgestellten augenblicklichen Blindleistungszustandsgröße, wie der berechneten maximal verfügbare Blindleistung, vorgesehen sein. Insbesondere kann auch die Bestimmungseinrichtung 22 aus der berechneten maximal verfügbare Blindleistung den maximalen Wirkleistungswert als Wirkleistungskorrekturwert berechnen, bei dem der geforderte Leistungsfaktorsollwert oder Blindleistungssollwert am Netzanschlusspunkt noch eingehalten werden kann.

Ferner weist die dargestellte Regelungsvorrichtung 12 mindestens einen Ausgang 21 auf. Der Ausgang 21 ist zum Leiten des bestimmten Wirkleistungskorrekturwerts an einen Wirkleistungsregler 26 über eine Verbindung 28 eingerichtet. Der Wirkleistungsregler 26, beispielsweise von einer Regelungseinrichtung des Offshore-Windenergiesystems, ist insbesondere eingerichtet zum Regeln der Wirkleistung des Offshore-Windenergiesystems abhängig von dem weitergeleiteten Wirkleistungskorrekturwert, derart, dass der bereitgestellte Leistungssollwert zumindest eingehalten wird. Vorzugsweise wird der Leistungssollwert derart eingehalten, dass die eingespeiste Wirkleistung nur soweit begrenzt wird, dass der vorgegebene Leistungssollwert (gerade eben) eingehalten wird. Mit anderen Worten entspricht insbesondere der vorgegebene Leistungsfaktorsollwert oder der vorgegebene Blindleistungssollwert dem Leistungsfaktor oder Blindleistungswert der eingespeisten Leistung.

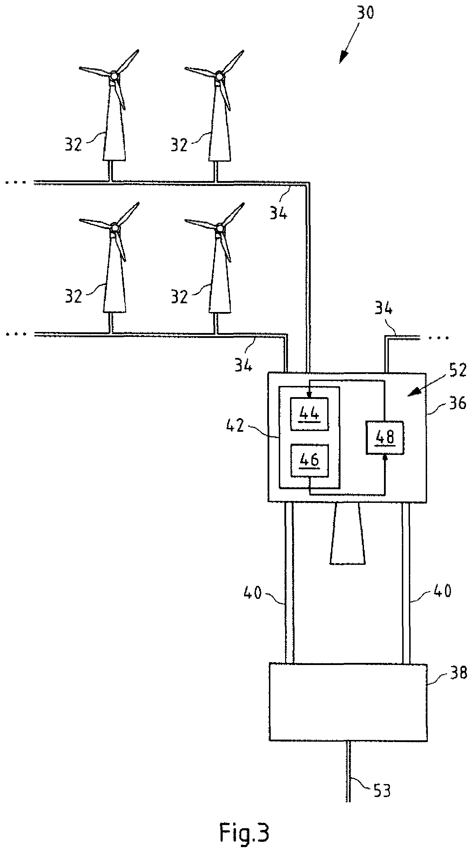

Figur 3 zeigt eine schematische Ansicht eines Ausführungsbeispiels eines Offshore-Windenergiesystems 30 gemäß der vorliegenden Offenbarung. Das Offshore-Windenergiesystem 30 verfügt über eine Vielzahl von Windkraftanlagen 32, die über Seekabel 34 mit einer Offshore-Substation 36 verbunden sind. Ein Seekabel 34 ist insbesondere dazu eingerichtet, die von einer Windkraftanlage 32 erzeugte elektrische Energie zur nächsten Windkraftanlage 32 bzw. an die Substation 36 zu übertragen.

Im vorliegenden Ausführungsbeispiel ist eine Mehrzahl von Windkraftanlagen 32 in mehreren Strängen bzw. Strings in Reihe geschaltet. Beispielsweise können acht Stränge mit jeweils sechs Windkraftanlagen vorgesehen sein.

Vorliegend sind zu Gunsten einer besseren Übersicht lediglich zwei Stränge mit jeweils zwei Windkraftanlagen 32 abgebildet. Ein Ende eines Strangs ist elektrisch über ein Seekabel 34 mit der Substation 36 verbunden. Die beiden anderen Enden können über ein zusätzliches (nicht dargestelltes) Seekabel miteinander verbunden werden. Ferner kann vorgesehen, dass ein Strang optional mit mehreren anderen Strängen verbunden werden kann. Es versteht sich, dass gemäß anderen Varianten der Erfindung die Windkraftanlagen auch in Ringstrukturen angeordnet sein können.

Zur Kommunikation mit den Windkraftanlagen 32 kann ein (nicht dargestelltes) Kommunikationsnetz, welches drahtlos und/oder drahtgebundenen konfiguriert sein kann, vorgesehen sein. Ferner sind vorliegend zwei weitere Seekabel 40 vorgesehen.

Die Seekabel 40 sind insbesondere eingerichtet, den von dem Offshore-Windenergiesystem 30 erzeugten Strom an eine Kopfstation 38, wie eine HGÜ-Kopfstation 38, zu übertragen. Die HGÜ-Kopfstation 38 kann insbesondere auf dem Land angeordnet sein, um den erzeugten Strom bzw. die Leistung in ein öffentliches Stromnetz 53 einzuspeisen. Die HGÜ-Kopfstation 38 kann hierfür weitere (nicht dargestellte) Umspanneinrichtungen aufweisen.

Neben (nicht dargestellten) Umspanneinrichtungen, wie Transformatoren, weist die Substation 36 vorliegend ein Ausführungsbeispiel einer Regelungsvorrichtung 52 auf. Die Regelungsvorrichtung 52 umfasst eine Regelungseinrichtung 42 und eine Regelungserweiterungseinrichtung 48. Die Regelungseinrichtung 42 ist insbesondere konfiguriert, um den eingespeisten Strom bzw. die eingespeiste Leistung in das Stromnetz 53 zu regeln. Hierzu weist die Regelungseinrichtung 42 im vorliegenden Ausführungsbeispiel einen Wirkleistungsregler 44 und einen Blindleistungsregler 46 auf.

Um insbesondere in jeder Betriebssituation einen vorgegebenen Leistungssollwert einzuhalten, der über einen (nicht dargestellten) Eingang vorgegeben werden kann, ist bei der vorliegenden Ausführungsform eine Regelungserweiterungseinrichtung 48 installiert, die mit der Regelungseinrichtung 42 gekoppelt ist. Insbesondere wird mindestens eine Stellgröße als augenblickliche Blindleistungszustandsgröße von der Regelungseinrichtung 42, insbesondere von dem Blindleistungsregler 46, an einen Eingang der Regelungserweiterungseinrichtung 48 geführt. Ferner wird mindestens eine weitere Stellgröße von der Regelungserweiterungseinrichtung 48 an die Regelungseinrichtung 42, insbesondere den Wirkleistungsregler 44, zurückgeführt.

Die an die Regelungserweiterungseinrichtung 48 geleitete Stellgröße weist insbesondere einen (direkten) physikalischen Zusammenhang zur Blindleistung auf. Beispielsweise kann der Ausgang des Blindleistungsreglers 46 als Stellgröße den Spannungssollwert der Windkraftanlagen 32 haben. Wie bereits beschrieben wurde, sind andere Stellgrößen ebenfalls möglich.

Die Regelungserweiterungseinrichtung 48 ist insbesondere eingerichtet, als zurückzuführende Stellgröße einen Wirkleistungskorrekturwert in Abhängigkeit der empfangenen Stellgröße zu bestimmen. Hierzu kann die Regelungserweiterungseinrichtung 48 mindestens einen Regler, wie einen PI-Regler, einen I-Regler, einen Fuzzy Regler, einen Monte Carlo Regler, einen Regler umfassend ein neuronales Netz und/oder einen Partikelschwarm Regler umfassen.

Der Wirkleistungskorrekturwert kann dann zur Regelungseinrichtung 42 zurückgeführt werden. Insbesondere der Wirkleistungsregler 44 kann abhängig von dem zurückgeführten Wirkleistungskorrekturwert geregelt werden, so dass die elektrische Leistung in das Stromnetz 53 unter Einhaltung des vorgegebenen Leistungssollwerts eingespeist werden kann.

Es versteht sich, dass die eine Regelungseinrichtung 48 und eine Regelungserweiterungseinrichtung 42 alternativ auch in der Kopfstation 38 installiert sein kann. Beispielsweise kann bei HVDC-Anbindung ein HGÜ-Konverter alleine die Blindleistung (ohne Einfluss der WEAs) regeln und die Regelungserweiterungseinrichtung umfassen. Ferner versteht es sich, dass alternativ zur dargestellten Regelungsvorrichtung 52 auch eine Regelungsvorrichtung 12 entsprechend Figur 2 vorgesehen sein kann.

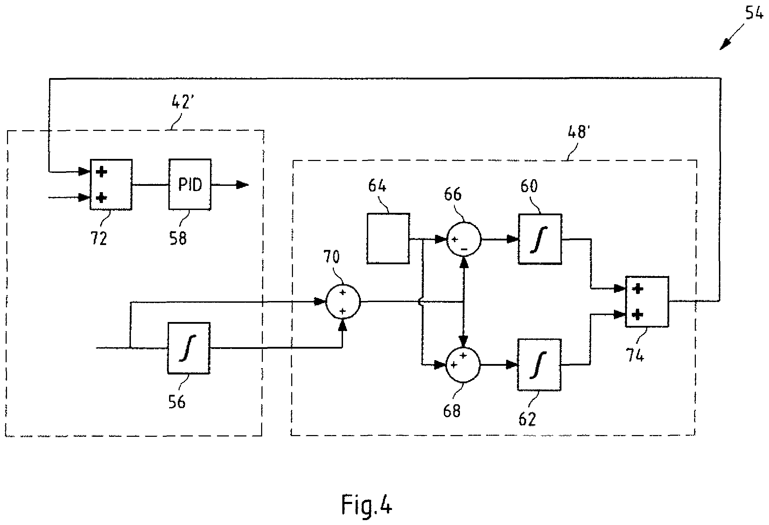

Nachfolgend wird ein bevorzugtes Ausführungsbeispiel einer Regelungsvorrichtung 54 gemäß der vorliegenden Offenbarung näher beschrieben. Die Figur 4 zeigt eine schematische Ansicht eines Ausführungsbeispiels einer Regelungsstruktur 54 gemäß der vorliegenden Offenbarung. Die Regelungsstruktur 54 kann vorliegend insbesondere die Regelungsvorrichtung 54 bilden. Die Regelungsvorrichtung 54 umfasst eine Regelungseinrichtung 42' und eine Regelungserweiterungseinrichtung 48'.

Die Regelungseinrichtung 42' umfasst insbesondere ein Blindleistungsregler 56 in Form eines I-Reglers 56 und einen Wirkleistungsreglers 58 in Form eines PI bzw. PID-Reglers 58. Die dargestellte Regelungserweiterungseinrichtung 48' umfasst einen ersten Regler 60 in Form eines (ausgangsbegrenzten) I-Reglers 60 und einen weiteren Regler 62 in Form eines (ausgangsbegrenzten) I-Reglers 62. Darüber hinaus ist ein Totbandglied 64 vorgesehen, welches als Totbandwert eine Konstante bereitstellt. Ferner ist zu erkennen, dass verschiedene Additions- und Subtraktionsglieder 66, 68, 70, 72, 74 von der Regelungsvorrichtung 54 umfasst sind.

Die Funktionsweise der dargestellten Regelungsvorrichtung 54 wird nachfolgend näher erläutert.

Die Regelungserweiterungseinrichtung 48' ist insbesondere als Begrenzungsregler 48' realisiert, welcher nur dann aktiv eingreift, wenn der Blindleistungsregler 56 in seine Begrenzung gelaufen ist und insbesondere gleichzeitig eine Regelabweichung an dem Eingang des Blindleistungsregler 56 mit dem gleichen Vorzeichen wie am Ausgang des Blindleistungsreglers 56 vorliegt. Der Ausgang des Begrenzungsreglers 48' wird vorliegend auf den Wirkleistungssollwert der Regelungseinrichtung 42' des Offshore-Windenergiesystems, insbesondere an den Wirkleistungsregler 58 über das Glied 72 zurückgeführt, um die notwendige Wirkleistungsreduktion zur Erfüllung der Blindleistungspriorität bzw, des vorgegeben Leistungssollwerts zu bewirken, Alternativ kann anstelle von einem Summationsglied auch ein Multiplikationsglied vorgesehen sein.

Der Begrenzungsregler 48' des vorliegenden Ausführungsbeispiels weist insbesondere zwei parallel angeordnete I-Regler 60, 62 auf. Am Eingang des Begrenzungsreglers 48' kann zunächst mittels eines Additionsglieds 70 das Ausgangssignal, also eine Stellgröße, des Blindleistungsreglers 56 mit der Regelabweichung desselben addiert werden.

Die hierdurch gebildete summierte Regelungsgröße wird vorliegend einem Summierungsglied 68 und einem Differenzglied 66 zugeführt. Insbesondere kann ein Differenzwert aus der summierten Regelungsgröße und dem bereitgestellten Totbandwert gebildet und dem ersten Regler 60 der Regelungserweiterungseinrichtung 48' zugeleitet werden. Ferner kann ein Summenwert aus der summierten Regelungsgröße und dem bereitgestellten Totbandwert gebildet und einem weiteren Regler 62 der Regelungserweiterungseinrichtung 48' zugeleitet werden.

Aus der gebildeten Differenz und Summe können demnach die Regelabweichungen für die beiden I-Regler 60, 62 berechnet werden. Der Totbandwert in Form einer Konstante stimmt vorzugsweise mit der Ausgangsbegrenzung des Blindleistungsreglers 56 überein (z.B. 0.2, da der Ausgangswert in dem vorliegenden Beispiel ein inkrementeller Spannungssollwert ist, welcher max. 0.2 p.u. betragen darf).

Die beiden I-Regler 60, 62 können in dem dargestellten Ausführungsbeispiel jeweils in einem Bereich von 0 bis zur negativen max. Wirkleistungsreduktion (in p.u.) begrenzt sein. Durch die unterschiedlichen Vorzeichen an dem Summations- bzw. Differenzglied 66, 68 der beiden I-Regler 60, 62 kann erreicht werden, dass bei positiver Regelabweichung und positiv begrenztem Ausgang des Blindleistungsreglers 56 der obere I-Regler 60 eine negative Regeldifferenz am Eingang anliegen hat. Der I-Regler 60 ist insbesondere eingerichtet, solange aufzuintegrieren, bis die Regeldifferenz durch Regeln des Wirkleistungsreglers 58, insbesondere durch Reduktion der Wirkleistung, zu null wird (oder die Grenze für Wirkleistungsreduktion erreicht wird).

Bei negativer Regelabweichung und negativ begrenztem Ausgang am Blindleistungsregler 56 kann sich vorliegend eine negative Regelabweichung am unteren I-Regler 62 ergeben. Der I-Regler 62 ist insbesondere eingerichtet, solange aufzuintegrieren, bis die Regelabweichung durch Regeln des Wirkleistungsreglers 58, insbesondere durch die Wirkleistungsreduktion, zu null wird (oder die Grenze für die Wirkleistungsreduktion erreicht wird).

Der Vorteil der dargestellten Regelungsstruktur 54 liegt insbesondere darin, dass die Wirkleistung ohne genaue Kenntnis des Betriebszustandes des Offshore-Windenergiesystems bei Bedarf genau soweit reduziert wird, wie es für die Einhaltung des Blindleistungssollwerts bzw. des Leistungsfaktorsollwerts notwendig ist.

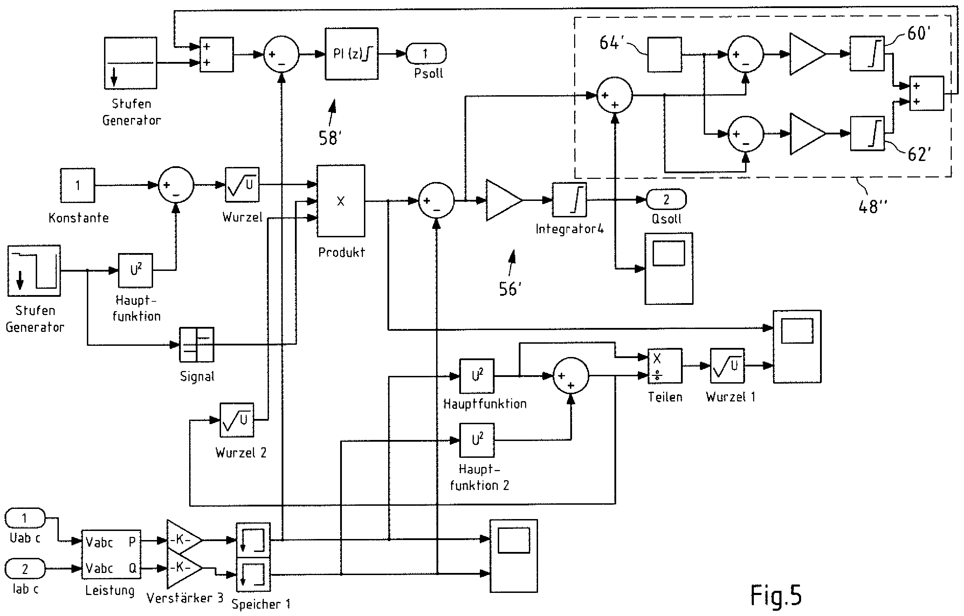

Figur 5 zeigt eine weitere Ausführungsform einer Regelungsvorrichtung gemäß der vorliegenden Offenbarung. Insbesondere ist ein detaillierterer Schaltplan umfassend einen Wirkleistungsregler 58', einen Blindleistungsregler 56' und eine Regelungserweiterungseinrichtung 48'' umfassend zwei I-Regler 60' und 62' sowie ein Totbandglied 64', wie im Zusammenhang mit Figur 4 bereits näher erläutert wurde, dargestellt.

Es sei angemerkt, dass für die Anbindung des Begrenzungsreglers 48'' an eine andere Parkregelungsvariante (z.B. Leistungsfaktorregelung oder Spannungsregelung) der Begrenzungsregler 48'' genauso wie beim Blindleistungsregler an den (begrenzten) Ausgang und an die Regelabweichung angeschlossen werden kann. Hierbei wäre nur evtl. eine andere Parametrierung des Begrenzungsreglers 48'' erforderlich.

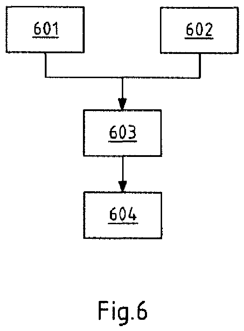

Figur 6 zeigt ein Diagramm eines Ausführungsbeispiels eines Verfahrens gemäß der vorliegenden Offenbarung.

In einem ersten Schritt 601 kann beispielsweise durch einen Netzbetreiber ein Leistungssollwert bereitgestellt werden, der von einem Offshore-Windenergiesystem eingehalten werden soll. Der Leistungssollwert kann ein Leistungsfaktorsollwert und/oder ein Blindleistungssollwert sein.

Vorzugsweise parallel zum Schritt 601 kann in Schritt 602 zumindest eine augenblickliche Blindleistungszustandsgröße des Offshore-Windenergiesystems bereitgestellt werden, wie beispielsweise in Zusammenhang mit Figuren 2, 3 und/oder 4 beschrieben wurde.

Basierend auf dem bereitgestellten Leistungssollwert und der bereitgestellten augenblicklichen Blindleistungszustandsgröße kann in Schritt 603 ein Wirkleistungskorrekturwert bestimmt werden, wie ebenfalls beispielsweise in Zusammenhang mit Figuren 2, 3 und/oder 4 beschrieben wurde.

Nach der Bestimmung des Wirkleistungskorrekturwerts kann dieser insbesondere auf einen Wirkleistungsregler einer Regelungseinrichtung des Offshore-Windenergiesystems angewendet werden. So kann in Schritt 604 die Wirkleistung des Offshore-Windenergiesystems in Abhängigkeit des bestimmten Wirkleistungskorrekturwerts derart geregelt werden, dass der bereitgestellte Leistungssollwert zumindest eingehalten wird.

## Patentansprüche

1. Verfahren zum Regeln von einem Leistungswert eines Offshore-Windenergiesystems (30), umfassend:

   - Bereitstellen eines Leistungssollwerts, wobei der Leistungssollwert ein Leistungsfaktorsollwert und/oder ein Blindleistungssollwert ist,
   - Bereitstellen von zumindest einer augenblicklichen Blindleistungszustandsgröße des Offshore-Windenergiesystems (30),
   - Bestimmen eines Wirkleistungskorrekturwerts abhängig von dem bereitgestellten Leistungssollwert und der bereitgestellten augenblicklichen Blindleistungszustandsgröße, und
   - Regeln der Wirkleistung des Offshore-Windenergiesystems (30) in Abhängigkeit des bestimmten Wirkleistungskorrekturwerts, derart, dass der bereitgestellte Leistungssollwert zumindest eingehalten wird, wobei das Bereitstellen der augenblicklichen Blindleistungszustandsgröße Folgendes umfasst:
   - Berechnen der maximal verfügbaren Blindleistung des Offshore-Windenergiesystems (30) abhängig von dem augenblicklichen Betriebszustand des Offshore-Windenergiesystems (30) und von mindestens einem vorbestimmten Blindleistungsbetriebsmittelparameter des Offshore-Windenergiesystems (30).

2. Verfahren nach Anspruch 1, **dadurch gekennzeichnet, dass**

   - das Bestimmen des Wirkleistungskorrekturwerts das Berechnen eines maximal zulässigen Wirkleistungssollwerts abhängig von der berechneten maximal verfügbaren Blindleistung umfasst, und
- die Wirkleistung des Offshore-Windenergiesystems (30) in Abhängigkeit des berechneten maximal zulässigen Wirkleistungssollwerts geregelt wird.

3. Verfahren zum Regeln von einem Leistungswert eines Offshore-Windenergiesystems (30), umfassend:

- Bereitstellen eines Leistungssollwerts, wobei der Leistungssollwert ein Leistungsfaktorsollwert und/oder ein Blindleistungssollwert ist,
- Bereitstellen von zumindest einer augenblicklichen Blindleistungszustandsgröße des Offshore-Windenergiesystems (30),
- Bestimmen eines Wirkleistungskorrekturwerts abhängig von dem bereitgestellten Leistungssollwert und der bereitgestellten augenblicklichen Blindleistungszustandsgröße, und
- Regeln der Wirkleistung des Offshore-Windenergiesystems (30) in Abhängigkeit des bestimmten Wirkleistungskorrekturwerts, derart, dass der bereitgestellte Leistungssollwert zumindest eingehalten wird, wobei das Bereitstellen der augenblicklichen Blindleistungszustandsgröße Folgendes umfasst:
- Leiten von mindestens einer mindestens eine Windkraftanlage (32) betreffende Stellgröße von einer Regelungseinrichtung (42, 42') des Offshore-Windenergiesystems (30) an eine Regelungserweiterungseinrichtung (48, 48', 48"),
- wobei die Stellgröße einen physikalischen Zusammenhang zur augenblicklichen Blindleistung des Offshore-Windenergiesystems (30) aufweist, und
- Bestimmen des Wirkleistungskorrekturwerts durch die Regelungserweiterungseinrichtung (48, 48', 48") in Abhängigkeit der bereitgestellten Stellgröße,
- wobei mindestens ein Totbandbereich in der Regelungserweiterungseinrichtung (48, 48', 48") vorgegeben wird, derart, dass nur bei Erreichen der Begrenzung der Regelungseinrichtung (42, 42') die Regelungserweiterungseinrichtung (48, 48', 48") des Offshore-Windenergiesystems (30) aktiviert wird.

4. Verfahren nach Anspruch 3, **dadurch gekennzeichnet, dass**

- als erste Stellgröße eine Ausgangsgröße eines Blindleistungsreglers (46, 56, 56') der Regelungseinrichtung (42, 42') an die Regelungserweiterungseinrichtung (48, 48', 48") geleitet wird,
- als mindestens eine weitere Stellgröße die Regelabweichung des Blindleistungsreglers (46, 56, 56') der Regelungseinrichtung (42, 42') an die Regelungserweiterungseinrichtung (48, 48', 48") geleitet wird, und
- die erste Stellgröße und die weitere Stellgröße zum Bilden einer summierten Regelungsgröße für die Regelungserweiterungseinrichtung (48, 48', 48") addiert wird.

5. Verfahren nach Anspruch 4, **dadurch gekennzeichnet, dass**

- als Totbandbereich ein Totbandwert entsprechend der Ausgangsbegrenzung des Blindleistungsreglers (46, 56, 56') der Regelungseinrichtung (42, 42') bereitgestellt wird,
- ein Differenzwert aus der summierten Regelungsgröße und dem Totbandwert gebildet und einem ersten Regler (60, 60') der Regelungserweiterungseinrichtung (48, 48', 48") zugeleitet wird,
- ein Summenwert aus der summierten Regelungsgröße und dem Totbandwert gebildet und mindestens einem weiteren Regler (62, 62') der Regelungserweiterungseinrichtung (48, 48', 48") zugeleitet wird, und
- wobei die Ausgangsgröße von einem der Regler (60, 60', 62, 62') als Wirkleistungskorrekturwert an einen Wirkleistungsregler (26, 44, 58, 58') geleitet wird.

6. Verfahren nach Ansprüche 3 bis 5, **dadurch gekennzeichnet, dass** die Regelungserweiterungseinrichtung (48, 48', 48") mindestens einen Regler (60, 60', 62, 62') aus der folgenden Gruppe umfasst:

- PI-Regler,
- I-Regler,
- Fuzzy-Regler,
- Monte-Carlo-Regler,
- Regler umfassend ein neuronales Netz, und
- Partikelschwarm-Regler.

7. Regelungsvorrichtung (12, 52, 54), für ein Offshore-Windenergiesystem (30), umfassend:

- mindestens einen Eingang (19) eingerichtet zum Empfangen eines Leistungssollwerts, wobei der Leistungssollwert ein Leistungsfaktorsollwert und/oder ein Blindleistungssollwert ist,
- mindestens einen weiteren Eingang (16) eingerichtet zum Empfangen von zumindest einer augenblicklichen Blindleistungszustandsgröße des Offshore-Windenergiesystems (30),
- mindestens eine Bestimmungseinrichtung (22, 48, 48', 48") eingerichtet zum Bestimmen eines Wirkleistungskorrekturwerts abhängig von dem bereitgestellten Leistungssollwert und der bereitgestellten augenblicklichen Blindleistungszustandsgröße, und
- mindestens einen Ausgang (21) eingerichtet zum Leiten des bestimmten Wirkleistungskorrekturwerts an einen Wirkleistungsregler (26, 44, 58, 58') eingerichtet zum Regeln der Wirkleistung des Offshore-Windenergiesystems (30) abhängig von dem weitergeleiteten Wirkleistungskorrekturwert, derart, dass der bereitgestellte Leistungssollwert zumindest eingehalten wird, wobei das Empfange der augenblicklichen Blindleistungszustandsgröße Folgendes umfasst:
- Berechnen der maximal verfügbaren Blindleistung des Offshore-Windenergiesystems (30) abhängig von dem augenblicklichen Betriebszustand des Offshore-Windenergiesystems (30) und von mindestens einem vorbestimmten Blindleistungsbetriebsmittelparameter des Offshore-Windenergiesystems (30).

8.  Regelungsvorrichtung (12, 52, 54), für ein Offshore-Windenergiesystem (30), umfassend:

- mindestens einen Eingang (19) eingerichtet zum Empfangen eines Leistungssollwerts, wobei der Leistungssollwert ein Leistungsfaktorsollwert und/oder ein Blindleistungssollwert ist,
- mindestens einen weiteren Eingang (16) eingerichtet zum Empfangen von zumindest einer augenblicklichen Blindleistungszustandsgröße des Offshore-Windenergiesystems (30),
- mindestens eine Bestimmungseinrichtung (22, 48, 48', 48") eingerichtet zum Bestimmen eines Wirkleistungskorrekturwerts abhängig von dem bereitgestellten Leistungssollwert und der bereitgestellten augenblicklichen Blindleistungszustandsgröße, und
- mindestens einen Ausgang (21) eingerichtet zum Leiten des bestimmten Wirkleistungskorrekturwerts an einen Wirkleistungsregler (26, 44, 58, 58') eingerichtet zum Regeln der Wirkleistung des Offshore-Windenergiesystems (30) abhängig von dem weitergeleiteten Wirkleistungskorrekturwert, derart, dass der bereitgestellte Leistungssollwert zumindest eingehalten wird, wobei das Empfangen der augenblicklichen Blindleistungszustandsgröße Folgendes umfasst:
- Leiten von mindestens einer mindestens eine Windkraftanlage (32) betreffende Stellgröße von einer Regelungseinrichtung (42, 42') des Offshore-Windenergiesystems (30) an eine Regelungserweiterungseinrichtung (48, 48', 48"),
- wobei die Stellgröße einen physikalischen Zusammenhang zur augenblicklichen Blindleistung des Offshore-Windenergiesystems (30) aufweist, und
- Bestimmen des Wirkleistungskorrekturwerts durch die Regelungserweiterungseinrichtung (48, 48', 48") in Abhängigkeit der bereitgestellten Stellgröße,
- wobei mindestens ein Totbandbereich in der Regelungserweiterungseinrichtung (48, 48', 48") vorgeben wird, derart, dass nur bei Erreichen der Begrenzung der Regelungseinrichtung (42, 42') die Regelungserweiterungseinrichtung (48, 48', 48") des Offshore-Windenergiesystems (30) aktiviert wird.

9.  Offshore-Windenergiesystem (30), umfassend:

- mindestens eine Windkraftanlage (32), und
- mindestens eine Regelungsvorrichtung (12, 52, 54) gemäß Anspruch 7 oder 8.

## Claims

1.  A method for controlling a power value of an offshore wind energy system (30), comprising:

- providing a power setpoint, wherein the power setpoint is a power factor setpoint and/or a reactive power setpoint,
- providing at least one instantaneous reactive power state magnitude of the offshore wind energy system (30),
- determining an active power correction value as a function of the provided power setpoint and the provided instantaneous reactive power state magnitude, and
- controlling the active power of the offshore wind energy system (30) as a function of the determined active power correction value such that the provided power setpoint is at least met, wherein the providing the instantaneous reactive power state magnitude comprises:

- calculating the maximum available reactive power of the offshore wind energy system (30) as a function of the instantaneous operational state of the offshore wind energy system (30) and at least one predetermined reactive power resource parameter of the offshore wind energy system (30).

2. Method according to claim 1, **characterized in that**

- the determining of the active power correction value comprises calculating a maximum allowable active power setpoint as a function of the calculated maximum available reactive power, and
- the active power of the offshore wind energy system (30) is controlled as a function of the calculated maximum allowable active power setpoint.

3. A method for controlling a power value of an offshore wind energy system (30), comprising:

- providing a power setpoint, wherein the power setpoint is a power factor setpoint and/or a reactive power setpoint,
- providing at least one instantaneous reactive power state magnitude of the offshore wind energy system (30),
- determining an active power correction value as a function of the provided power setpoint and the provided instantaneous reactive power state magnitude, and
- controlling the active power of the offshore wind energy system (30) as a function of the determined active power correction value, such that the provided power setpoint is at least met, wherein the providing the instantaneous reactive power state magnitude comprises:
- routing at least one control magnitude relating to at least one wind turbine (32) from a control unit (42, 42') of the offshore wind energy system (30) to a control extension unit (48, 48', 48"),
- wherein the control magnitude has a physical relationship to the instantaneous reactive power of the offshore wind energy system (30), and
- determining the active power correction value by the control extension unit (48, 48', 48") as a function of the provided control magnitude,
- wherein at least one deadband range is predefined in the control extension unit (48, 48', 48") such that the control extension unit (48, 48', 48") of the offshore wind energy system (30) is activated only when the limitation of the control unit (42, 42') is reached.

4. Method according to claim 3, **characterized in that**

- an output magnitude of a reactive power controller (46, 56, 56') of the control unit (42, 42') is passed to the control extension unit (48, 48', 48") as a first control magnitude,
- as at least one further control magnitude, the control deviation of the reactive power controller (46, 56, 56') of the control unit (42, 42') is passed to the control extension unit (48, 48', 48"), and
- the first control magnitude and the further control magnitude are added to form a summed control magnitude for the control extension unit (48, 48', 48").

5. Method according to claim 4, **characterized in that**

- a deadband value corresponding to the output limitation of the reactive power controller (46, 56, 56') of the control extension unit (42, 42') is provided as the deadband range,
- a difference value is formed from the summed control magnitude and the deadband value and is fed to a first controller (60, 60') of the control extension unit (48, 48', 48")
- a summed value is formed from the summed controlled magnitude and the deadband value and is fed to at least one further controller (62, 62') of the control extension unit (48, 48', 48"), and
- wherein the output magnitude from one of the controllers (60, 60', 62, 62') is passed as an active power correction value to an active power controller (26, 44, 58, 58').

6. Method according to claims 3 to 5, **characterized in that** the control extension unit (48, 48', 48") comprises at least one controller (60, 60', 62, 62') from the following group:

- PI controller,
- I controller,
- Fuzzy controller,

- Monte Carlo controller,
- Controllers comprising a neural network, and
- Particle swarm controllers.

**7.** Control apparatus (12, 52, 54) for an offshore wind energy system (30), comprising:

- at least one input (19) configured to receive a power setpoint, wherein the power setpoint is a power factor setpoint and/or a reactive power setpoint,
- at least one further input (16) configured to receive at least one instantaneous reactive power state magnitude of the offshore wind energy system (30),
- at least one determining unit (22, 48, 48', 48") configured to determine an active power correction value as a function of the provided power setpoint and the provided instantaneous reactive power state magnitude, and
- at least one output (21) configured to pass the determined active power correction value to an active power controller (26, 44, 58, 58') configured to control the active power of the offshore wind energy system (30) as a function of the passed active power correction value, such that the provided power setpoint is at least met, wherein receiving the instantaneous reactive power state magnitude comprises:
- calculating the maximum available reactive power of the offshore wind energy system (30) as a function of the instantaneous operational state of the offshore wind energy system (30) and at least one predetermined reactive power resource parameter of the offshore wind energy system (30).

**8.** Control apparatus (12, 52, 54) for an offshore wind energy system (30), comprising:

- at least one input (19) configured to receive a power setpoint, wherein the power setpoint is a power factor setpoint and/or a reactive power setpoint,
- at least one further input (16) configured to receive at least one instantaneous reactive power state magnitude of the offshore wind energy system (30),
- at least one determining unit (22, 48, 48', 48") configured to determine an active power correction value as a function of the provided power setpoint and the provided instantaneous reactive power state magnitude, and
- at least one output (21) configured to pass the determined active power correction value to an active power controller (26, 44, 58, 58') configured to control the active power of the offshore wind energy system (30) as a function of the passed active power correction value such that the provided power setpoint is at least met, wherein receiving the instantaneous reactive power state magnitude comprises:
- routing at least one control magnitude relating to at least one wind turbine (32) from a control unit (42, 42') of the offshore wind energy system (30) to a control extension unit (48, 48', 48"),
- wherein the control magnitude has a physical relationship to the instantaneous reactive power of the offshore wind energy system (30), and
- determining the active power correction value by the control extension unit (48, 48', 48") as a function of the provided control magnitude,
- wherein at least one deadband range is predefined in the control extension unit (48, 48', 48") such that the control extension unit (48, 48', 48") of the offshore wind energy system (30) is activated only when the limitation of the control unit (42, 42') is reached.

**9.** Offshore wind energy system (30), comprising:

- at least one wind turbine (32), and
- at least one control apparatus (12, 52, 54) according to claim 7 or 8.

**Revendications**

**1.** Procédé pour régler une valeur de puissance d'un système d'énergie éolienne offshore (30), comprenant :

- Fournir une valeur cible de puissance, dans lequel la valeur cible de puissance est une valeur de facteur de puissance cible et/ou une valeur cible de puissance réactive,
- fournir au moins une variable d'état de puissance réactive instantanée du système d'énergie éolienne offshore (30),
- déterminer une valeur de correction de puissance active en fonction de la valeur cible de puissance fournie et de la variable d'état de puissance réactive instantanée fournie, et

- régler la puissance active du système d'énergie éolienne offshore (30) en fonction de la valeur de correction de puissance active déterminée, de sorte que la valeur cible de puissance fournie soit au moins maintenue, dans lequel la fourniture de la variable d'état de puissance réactive instantanée comprend :
- calculer la puissance réactive maximale disponible du système d'énergie éolienne offshore (30) en fonction de l'état opérationnel instantané du système d'énergie éolienne offshore (30) et d'au moins un paramètre de ressource de puissance réactive prédéterminé du système d'énergie éolienne offshore (30).

2. Procédé selon la revendication 1, **caractérisé**

   - **en ce que** la détermination de la valeur de correction de puissance active comprend le calcul d'une valeur cible maximale autorisée de puissance active en fonction de la puissance réactive maximale disponible calculée, et
   - **en ce que** la puissance active du système d'énergie éolienne offshore (30) est régulée en fonction de la valeur cible maximale autorisée de puissance active calculée.

3. Procédé pour régler une valeur de puissance d'un système d'énergie éolienne offshore (30), comprenant :

   - - Fournir une valeur cible de puissance, dans lequel la valeur cible de puissance est une valeur de facteur de puissance cible et/ou une valeur cible de puissance réactive,
   - fournir au moins une variable d'état de puissance réactive instantanée du système d'énergie éolienne offshore (30),
   - déterminer une valeur de correction de puissance active en fonction de la valeur cible de puissance fournie et de la variable d'état de puissance réactive instantanée fournie, et
   - régler la puissance active du système d'énergie éolienne offshore (30) en fonction de la valeur de correction de puissance active déterminée, de sorte que la valeur cible de puissance fournie soit au moins maintenue, dans lequel la fourniture de la variable d'état de puissance réactive instantanée comprend :
   - acheminer au moins une variable de commande relative à au moins une éolienne (32) depuis un dispositif de commande (42, 42') du système d'énergie éolienne offshore (30) vers un dispositif d'expansion de commande (48, 48', 48"),
   - où la variable de commande a une relation physique avec la puissance réactive instantanée du système d'énergie éolienne offshore (30), et
   - déterminer la valeur de correction de la puissance active par le dispositif d'expansion de commande (48, 48', 48") en fonction de la variable de commande fournie,
   - dans lequel au moins une plage de bande morte est prédéfinie dans le dispositif d'expansion de commande (48, 48', 48"), de sorte que le dispositif d'expansion de commande (48, 48', 48") du système d'énergie éolienne offshore (30) est activé uniquement lorsque la limitation du dispositif de commande (42, 42') est atteinte.

4. Procédé selon la revendication 3, **caractérisé**

   - **en ce qu'**en tant que première variable de commande, une grandeur de sortie d'un régulateur de puissance réactive (46, 56, 56') du dispositif de commande (42, 42') est transmise au dispositif d'expansion de commande (48, 48', 48"),
   - **en ce qu'**en tant qu'au moins une variable de commande supplémentaire, l'écart de réglage du régulateur de puissance réactive (46, 56, 56') du dispositif d'expansion de commande (48, 48', 48") est transmis au dispositif d'expansion de commande (48, 48', 48"), et
   - **en ce que** la première variable de commande et la variable de commande supplémentaire sont additionnées pour former une variable de réglage additionnée pour le dispositif d'expansion de commande (48, 48', 48").

5. Procédé selon la revendication 4, **caractérisé**

   - **en ce qu'**en tant que plage de bande morte, une valeur de bande morte correspondant à la limitation de sortie du régulateur de puissance réactive (46, 56, 56') du dispositif de régulation (42, 42') est prévue,
   - une valeur différentielle est formée à partir de la variable de réglage additionnée et de la valeur de bande morte et est amenée à un premier régulateur (60, 60') du dispositif d'expansion de commande (48, 48', 48"),
   - une valeur de somme est formée à partir de la grandeur de commande additionnée et de la valeur de bande morte et est amenée à au moins un régulateur additionnel (62, 62') du dispositif d'expansion de commande (48, 48', 48"), et
   - dans lequel la grandeur de sortie de l'un des régulateurs (60, 60', 62, 62') est amenée comme valeur de correction de puissance active à un régulateur de puissance active (26, 44, 58, 58').

6. Procédé selon les revendications 3 à 5, **caractérisé en ce que** le dispositif d'expansion de commande (48, 48', 48") comprend au moins un contrôleur (60, 60', 62, 62') du groupe suivant :

- Régleur PI,
- Régleur I,
- Régleur Fuzzy,
- Régleur Monte Carlo,
- Régleur comportant un réseau neuronal, et
- Régleur à essaim de particules.

7. Dispositif de réglage (12, 52, 54) pour un système d'énergie éolienne offshore (30), comprenant :

- au moins une entrée (19) conçue pour recevoir une valeur cible de puissance, la valeur cible de puissance étant une valeur de facteur de puissance cible et/ou une valeur cible de puissance réactive,
- au moins une entrée supplémentaire (16) conçue pour recevoir au moins une variable d'état de puissance réactive instantanée du système d'énergie éolienne offshore (30),
- au moins un dispositif de détermination (22, 48, 48', 48") conçu pour déterminer une valeur de correction de puissance active en fonction de la valeur cible de puissance fournie et de la variable d'état de puissance réactive instantanée fournie, et
- au moins une sortie (21) conçue pour transmettre la valeur de correction de puissance active déterminée à un régleur de puissance active (26, 44, 58, 58') conçu pour régler la puissance active du système d'énergie éolienne offshore (30) en fonction de la valeur de correction de puissance active transmise, de telle sorte que la valeur cible de puissance fournie soit au moins maintenue, dans lequel la réception de la variable d'état de puissance réactive instantanée comprend :
- calculer la puissance réactive maximale disponible du système d'énergie éolienne offshore (30) en fonction de l'état opérationnel instantané du système d'énergie éolienne offshore (30) et d'au moins un paramètre de ressource de puissance réactive prédéterminé du système d'énergie éolienne offshore (30).

8. Dispositif de réglage (12, 52, 54) pour un système d'énergie éolienne offshore (30), comprenant :

- au moins une entrée (19) conçue pour recevoir une valeur cible de puissance, la valeur cible de puissance étant une valeur de facteur de puissance cible et/ou une valeur cible de puissance réactive,
- au moins une entrée supplémentaire (16) conçue pour recevoir au moins une variable d'état de puissance réactive instantanée du système d'énergie éolienne offshore (30),
- au moins un dispositif de détermination (22, 48, 48', 48") conçu pour déterminer une valeur de correction de puissance active en fonction de la valeur cible de puissance fournie et de la variable d'état de puissance réactive instantanée fournie, et
- au moins une sortie (21) conçue pour transmettre la valeur de correction de puissance active déterminée à un régleur de puissance active (26, 44, 58, 58') conçu pour régler la puissance active du système d'énergie éolienne offshore (30) en fonction de la valeur de correction de puissance active transmise, de telle sorte que la valeur cible de puissance fournie soit au moins maintenue, dans lequel la réception de la variable d'état de puissance réactive instantanée comprend :

- acheminer au moins une variable de commande relative à au moins une éolienne (32) depuis un dispositif de commande (42, 42') du système d'énergie éolienne offshore (30) vers un dispositif d'expansion de commande (48, 48', 48"),
- où la variable de commande a une relation physique avec la puissance réactive instantanée du système d'énergie éolienne offshore (30), et
- déterminer la valeur de correction de la puissance active par le dispositif d'expansion de commande (48, 48', 48") en fonction de la variable de commande fournie,
- dans lequel au moins une plage de bande morte est prédéfinie dans le dispositif d'expansion de commande (48, 48', 48"), de sorte que le dispositif d'expansion de commande (48, 48', 48") du système d'énergie éolienne offshore (30) est activé uniquement lorsque la limitation du dispositif de commande (42, 42') est atteinte.

9. Système d'énergie éolienne offshore (30) comprenant :

   - au moins une éolienne (32), et
   - au moins un dispositif de commande (12, 52, 54) selon la revendication 7 ou 8.

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015249415 A